# EUROPEAN PATENT APPLICATION

(11) **EP 4 112 181 A1**
(43) Date of publication of application: **04.01.2023**
(21) Application number: 21760994.0
(22) Date of filing: 08.02.2021
(51) Int. Cl.: B04B 5/04, B04B 7/08

(54) **FLUID CONTROL DEVICE USING CENTRIFUGAL FORCE**

(30) Priority: 26.02.2020 KR 20200023875
(71) Applicant: Clinomics Inc., Ulsan 44919 (KR)
(72) Inventor: LEE, Kyusang, Ulju-gun, Ulsan 44920 (KR); PARK, Hee Chul, Ulju-gun, Ulsan 44931 (KR); CHOI, Ju Young, Ulju-gun, Ulsan 44922 (KR)
(74) Representative: Germain Maureau
(86) International application number: PCT/KR2021/001669
(87) International publication number: WO 2021/172792

(57) **Abstract**

The present embodiments relate to a fluid control device using centrifugal force. The fluid control device using centrifugal force includes a fluid control portion comprising a plurality of chambers and controlling a movement of a fluid inside the chamber; a lower fixing portion positioned on a lower portion of the fluid control portion and fixing the plurality of chambers; an upper fixing portion positioned an on upper portion of the fluid control portion and fixing the plurality of chambers; and a fastening member penetrating and fastening the lower fixing portion, the fluid control portion, and the upper fixing portion, wherein the plurality of chambers are disposed to face each other and placed on the lower fixing portion.

## Description

### [Technical Field]

The present embodiment relates to a fluid control device using centrifugal force, and more particularly, to a fluid control device using centrifugal force for automating a chemical reaction or a physical unit operation through movement, separation, and mixing of a fluid.

### [Background Art]

In general, a lab-on-a-disc, that is, a fluid control device using centrifugal force, is a device capable of performing various functions by appropriately using a technology for controlling the flow of a fluid using centrifugal force and a valve. In particular, the fluid control device using centrifugal force may be used for diagnosis or quarantine by rapidly analyzing a fluid in a biomedical field or a livestock field. Such a fluid control device may generally be formed as a single circular disk.

On the other hand, whole blood or various biological liquids may be separated from their components or parts. For example, the whole blood includes plasma, various white blood cells, platelets, red blood cells, etc. and may be separated for each component by using a centrifugal separator.

For example, in order to separate the whole blood for each component by using a centrifugal separator, the whole blood was put into a single tube container and then put into the centrifugal separator and separated based on a specific gravity. The centrifuged fluid was stacked in several layers for each component based on the specific gravity, and each component stacked in layers was manually recovered.

However, in general, when each layer of the fluid stacked for each component is separated manually, because the working efficiency is significantly reduced, a phenomenon in which the centrifuged components are mixed again occurs, and the centrifuged components have no choice but to be extracted in that state, perfectly extracting only a certain component was limited. In addition, when various fluids are simultaneously processed in a narrow space, there was a problem that cross-contamination often occurs.

Therefore, when separating a biological fluid such as the whole blood, a fluid control device using centrifugal force may be applied to easily extract a desired component without recontamination in an extraction process after separating the fluid for each component.

However, because the centrifugal force-based fluid control device that is currently commercialized and used in various applications uses a very small flow rate of about 1 ml, a disk is thin and a manufacturing difficulty is not high. However, when the fluid control device using centrifugal force needs to handle a large amount of fluid of about 10 ml, because the thickness and size of the disk that is a target rotating in the fluid control device increase, and an input channel is also large and long for a fast fluid movement, valves used need to also be used with reinforced strength and stability. Therefore, the weight and size of the fluid control device using centrifugal force increase, making it difficult to maintain a designed shape during injection molding, increasing the manufacturing difficulty, and reducing productivity.

### [Disclosure]

### [Technical Problem]

The present invention has been made in an effort to provide a fluid control device using centrifugal force having advantages of preventing vibration during the rotation by easily fixing a fluid control portion including a plurality of chambers and precisely performing a position control by being well fixed to a rotation shaft.

### [Technical Solution]

Another embodiment of the present invention provides a fluid control device using centrifugal force including a fluid control portion including a plurality of chambers and controlling a movement of a fluid inside the chamber; a lower fixing portion positioned on a lower portion of the fluid control portion and fixing the plurality of chambers; an upper fixing portion positioned an on upper portion of the fluid control portion and fixing the plurality of chambers; and a fastening member penetrating and fastening the lower fixing portion, the fluid control portion, and the upper fixing portion, wherein each of the plurality of chambers are disposed to face each other and placed on the lower fixing portion.

The chamber may have a sector shape in a planar view, and the chambers adjacently disposed may include a spaced portion and be spaced apart from each other.

The lower fixing portion may include a support portion supporting the fluid control portion, and a lower edge portion installed along an edge of the support portion and forming a seating groove for seating the fluid control portion, and an inner wall of the lower edge portion may include a plurality of lower fixing grooves.

An outer sidewall of the chamber may include a sidewall fixing protrusion combined with the lower fixing groove.

The sidewall fixing protrusion may be linear.

The fastening member may include a lower fastening portion positioned at the center of the support portion, and an upper fastening portion positioned at the center of the upper fixing portion and fastened to the lower fastening portion.

The lower fastening portion may include a circular central support portion, and a protrusion portion installed on the central support portion and fastened to the upper fastening portion, and an inner sidewall of the fluid control portion may be fixed in contact with a sidewall of the central support portion.

An upper surface of the support portion may include a plurality of support fixing grooves, a lower surface of the chamber may include a plurality of lower circular protrusions, and the support fixing groove may be combined with the lower circular protrusion.

The plurality of support fixing grooves may be formed at positions corresponding to corners of the chamber of the sector shape.

The lower fixing portion may further include a plurality of linear fixing portions positioned on the support portion, and the linear fixing portions may connect the lower edge portion and the central support portion.

The linear fixing portion may be combined with the spaced portion.

The upper fixing portion may include an upper edge portion overlapping the lower edge portion, a central portion positioned to be spaced apart from the upper edge portion and corresponding to the lower fastening portion, and a plurality of branch portions connecting the upper edge portion and the central portion, and the branch portion is combined with the spaced portion.

### [Advantageous Effects]

The fluid control device using centrifugal force according to an embodiment fixes the fluid control portion separated into the plurality of chambers symmetrically to a rotation shaft using the lower fixing portion, the upper fixing portion, and the fastening member, thereby preventing the vibration of the fluid control portion that may be generated by the individual centrifugal force during the rotation and precisely control the position.

In addition, when the fluid control portion is placed on the lower fixing portion, the branch portion of the upper fixing portion is inserted into and combined with a space (e.g., a spaced portion) between the separated individual chambers of the fluid control portion, thereby fixing the position of each chamber.

### [Description of the Drawings]

FIG. 1 is an exploded perspective view of a fluid control device using centrifugal force according to an embodiment.
FIG. 2 is a plan view of a lower fixing portion of FIG. 1.
FIG. 3 is a plan view of each chamber of a fluid control portion of FIG. 1.
FIG. 4 is a plan view showing a state in which the fluid control portion of the fluid control device using centrifugal force is fixed with the lower fixing portion according to an embodiment.
FIG. 5 is a plan view of an upper fixing portion of FIG. 1.
FIG. 6 is a cross-sectional view cut along the line VI-VI' of FIG. 5.
FIG. 7 is a cross-sectional view cut along the line VII-VII' of FIG. 5.
FIG. 8 is a plan view showing a state in which the fluid control portion of the fluid control device using centrifugal force is fixed with the lower fixing portion and the upper fixing portion according to an embodiment.
FIG. 9 is a plan view schematically illustrating a fluid control portion of a fluid control device using centrifugal force according to an embodiment.
FIG. 10 is an exploded perspective view of the fluid control portion of FIG. 9.
FIG. 11 is a cross-sectional view of a chamber of FIG. 9 cut along a line XI-XI'.
FIG. 12 is a plan view of a lower fixing portion of a fluid control device using centrifugal force according to another embodiment.
FIG. 13 is a schematic cross-sectional perspective view taken along line XIII-XIII' of FIG. 12.
FIG. 14 is a bottom view of a chamber of a fluid control portion of the fluid control device using centrifugal force according to another embodiment.
FIG. 15 is a plan view of a lower fixing portion of a fluid control device using centrifugal force according to another embodiment.
FIG. 16 is a schematic cross-sectional perspective view taken along line XVI-XVI' of FIG. 15.

### [Mode for Invention]

Hereinafter, with reference to the accompanying drawings, the present disclosure will be described in detail such that those skilled in the art may easily carry out the present disclosure with respect to the embodiments of the present disclosure. The present disclosure may be embodied in many different forms and is not limited to the embodiments set forth herein. To clearly describe the present disclosure, parts unrelated to the descriptions are omitted, and the same or similar elements are denoted with the same reference numerals throughout the specification.

In addition, since the size and thickness of each component shown in the drawings are arbitrarily indicated for convenience of description, the present disclosure is not necessarily limited to those illustrated. In the drawings, the thickness of layers, films, panels, regions, etc., are exaggerated for clarity. And, in the drawings, for convenience of explanation, thicknesses of some layers and regions are exaggerated.

In addition, it will be understood that when an element such as a layer, film, region, or substrate is referred to as being "on" another element, it may be directly on the other element or intervening elements may also be present. In contrast, when an element is referred to as being "directly on" another element, there are no intervening elements present. In addition, being "above" or "on" a reference portion is positioned above or below the reference portion, and does not necessarily mean being positioned "above" or "on" in the opposite direction of gravity.

In addition, throughout the specification, unless explicitly described to the contrary, the word "comprise", and variations such as "comprises" or "comprising", will be understood to imply the inclusion of stated elements but not the exclusion of any other elements.

In addition, throughout the specification, a "planar view" means when a target part is viewed from above, and a "cross-sectional view" means when a cross-section obtained by vertically cutting the target part is viewed from the side.

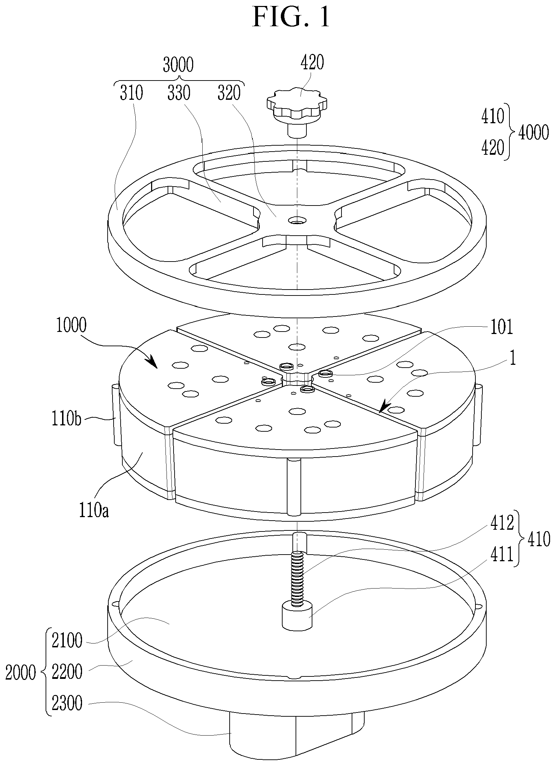

Hereinafter, a fluid control device using centrifugal force according to an embodiment is described in detail with reference to FIGS. 1 to 11.

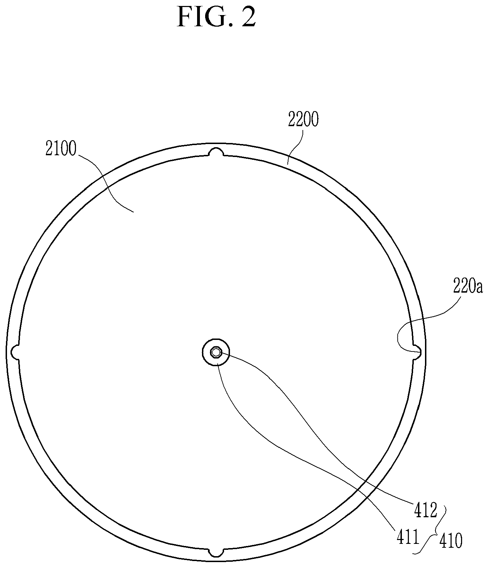

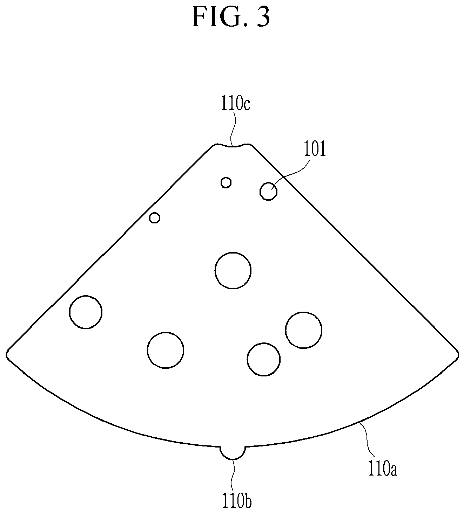

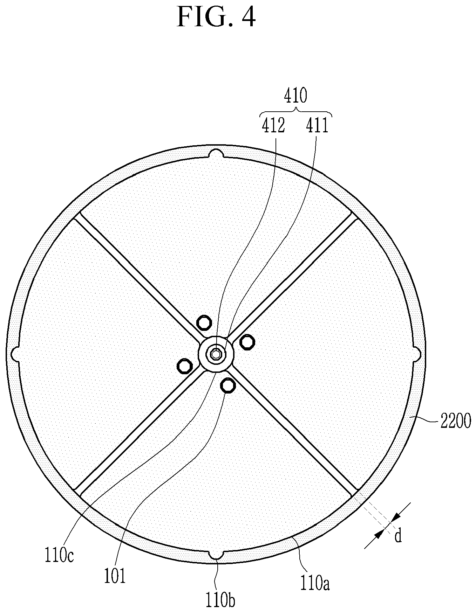

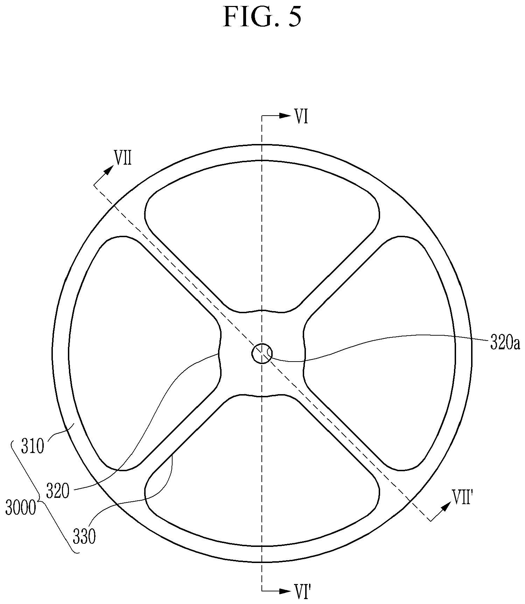

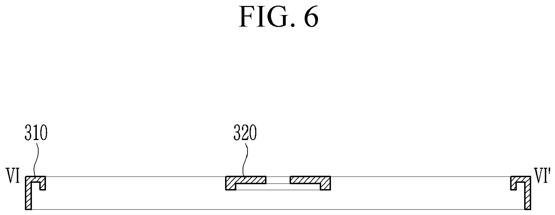

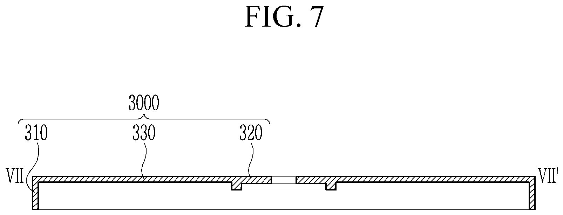

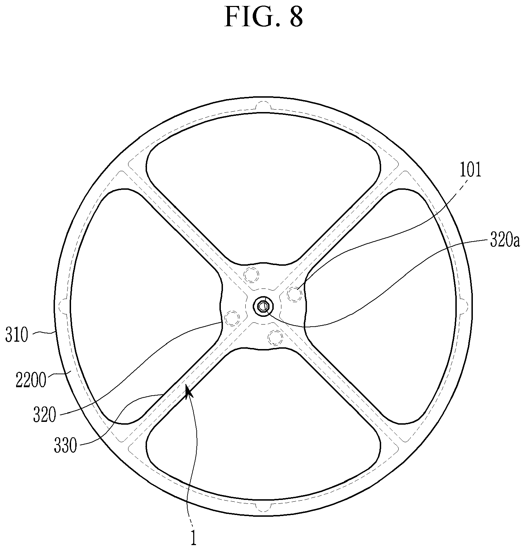

FIG. 1 is an exploded perspective view of a fluid control device using centrifugal force according to an embodiment, FIG. 2 is a plan view of a lower fixing portion of FIG. 1, FIG. 3 is a plan view of each chamber of a fluid control portion of FIG. 1, FIG. 4 is a plan view showing a state in which the fluid control portion of the fluid control device using centrifugal force is fixed with the lower fixing portion according to an embodiment, FIG. 5 is a plan view of an upper fixing portion of FIG. 1, FIG. 6 is a cross-sectional view cut along the line VI-VI' of FIG. 5, FIG. 7 is a cross-sectional view cut along the line VII-VII' of FIG. 5, and FIG. 8 is a plan view showing a state in which the fluid control portion of the fluid control device using centrifugal force is fixed with the lower fixing portion and the upper fixing portion according to an embodiment.

As shown in FIG. 1, the fluid control device using centrifugal force according to an embodiment includes a fluid control portion 1000, a lower fixing portion 2000, an upper fixing portion 3000, and a fastening member 4000.

The fluid control portion 1000 includes a plurality of chambers 1100, and the chamber 1100 may have a sector shape in a planar view. Accordingly, the fluid control portion 1000 including the plurality of chambers 1100 may generally have a circular shape in a planar view. In this regard, the plurality of chambers 1100 are sequentially arranged adjacent to each other, and the adjacent chambers 1100 may have a spaced portion 1 (see FIG. 4 ) of a predetermined distance d and may be spaced apart from each other.

When the fluid control portion is manufactured as a single structure by injection, etc., it is difficult to completely implement a complex internal structure of the fluid control portion. Accordingly, in the present embodiment, the fluid control portion 1000 is manufactured by dividing the fluid control portion 1000 into the plurality of chambers 1100 (e.g., divided into 4 parts), and thus, the quality of injection may be maintained.

As shown in FIGS. 1 and 3, an outer sidewall 110a of the chamber 1100 may have an arc shape in a planar view, and an inner sidewall 110c of the chamber may also have the arc shape in a planar view.

The outer sidewall 110a of the chamber may have at least one sidewall fixing protrusion 110b. As shown in FIG. 1, the sidewall fixing protrusion 110b may have a linear shape extending in a vertical direction.

In the present embodiment, the fluid control portion includes four chambers, but is not necessarily limited thereto, and may include various number of chambers.

The lower fixing portion 2000 is positioned on a lower portion of the fluid control portion 1000 and may fix the plurality of chambers 1100 to each other.

The lower fixing portion 2000 may include a support portion 2100, a lower edge portion 2200, and a rotation shaft 2300.

The support portion 2100 has a circular shape in a planar view and may support the plurality of chambers 1100.

The lower edge portion 2200 may be installed along an edge of the support portion 2100 to form a seating groove for seating the fluid control portion 110. At this time, as shown in FIGS. 1 and 2, an inner wall of the lower edge portion 2200 may have a plurality of lower fixing grooves 220a. The four lower fixing grooves 220a are illustrated in the present embodiment, but is not necessarily limited thereto, and an appropriate number of lower fixing grooves may be formed.

Accordingly, as shown in FIG. 4, the sidewall fixing protrusion 110b may be combined with the lower fixing groove 220a to fix the fluid control portion 1000.

The rotation shaft 2300 may be combined with a separate rotor (not shown) to transfer the rotational force of the rotor to the fluid control portion 1000.

The upper fixing portion 3000 is positioned on an upper portion of the fluid control portion 1000 and may fix the plurality of chambers 1100 to each other.

As shown in FIGS. 1 and 5 to 8, the upper fixing portion 3000 may include an upper edge portion 310, a central portion 320, and a plurality of branch portions 330.

The upper edge portion 310 has a circular ring shape and may overlap the lower edge portion 2200 of the lower fixing portion 2000.

The central portion 320 may be positioned to be spaced apart from the upper edge portion 310 and may be positioned to correspond to the fastening member 4000. The central portion 320 may be positioned in the inner direction of the upper edge portion 310. The central portion 320 may have a through hole 320a.

The plurality of branch portions 310 may have a linear shape and may connect the upper edge portion 310 and the central portion 320. The plurality of branch portions 310 may be formed at positions corresponding to the spaced portion 1 of the fluid control portion 1000.

Accordingly, the branch portion 310 may be combined with the spaced portion 1 to fix the plurality of chambers 1100 to each other. That is, since the branch portion 310 is combined with the spaced portion 1, a space between the adjacent chambers 1100 is filled, and thus, the movement of the chamber 1100 may be limited. Accordingly, during a centrifugal separation operation, vibration and bending of the chamber 1100 may be prevented.

The fastening member 4000 may sequentially pass through and fasten the lower fixing portion 2000, the fluid control portion 1000, and the upper fixing portion 3000.

The fastening member 4000 may include a lower fastening portion 410 and an upper fastening portion 420 disposed at positions corresponding to each other.

The lower fastening portion 410 may be positioned in the center of the support portion 2100. The lower coupling portion 410 may include a circular central support portion 411 and a protrusion portion 412 installed on the central support portion 411 and fastened to the upper fastening portion. For example, the lower fastening portion 410 may have a bolt shape, etc.

The upper fastening portion 420 is positioned in the center of the upper fixing portion 3000, and may pass through the through hole 320a of the central portion 320 to be fastened to the lower fastening portion 410. For example, the upper fastening portion 410 may have a nut shape, etc.

It is shown in the present embodiment that the fastening member 4000 has a structure including a bolt and a nut shape and fastened, but is not necessarily limited thereto. A structure for fixing the fluid control portion 1000 so as not to be shaken, for example, various arbitrary structures such as a magnetic combining structure, an adhesive structure, etc. are possible.

As such, the fluid control portion 1000 may be fixed not to move in a vertical direction by using the lower fastening portion 410 positioned at the lower portion of the fluid control portion 1000 and the upper fastening portion 420 positioned on an upper portion of the fluid control portion 1000.

In this regard, the inner sidewall 110c of the fluid control portion 1000 may contact the sidewall of the central support portion 411 to fix the chamber 1100.

As such, the sidewall fixing protrusion 110b is combined with the lower fixing groove 220a of the lower fixing portion 2000 so that the outer sidewall 110a of the chamber fixes the chamber 1100, and the inner sidewall 110c of the fluid control portion 1000 contacts the sidewall of the central support portion 411 of the lower fixing portion 2000 and fixes the chamber 1100, and thus, the chamber 1100 may be fixed not to move on a plane.

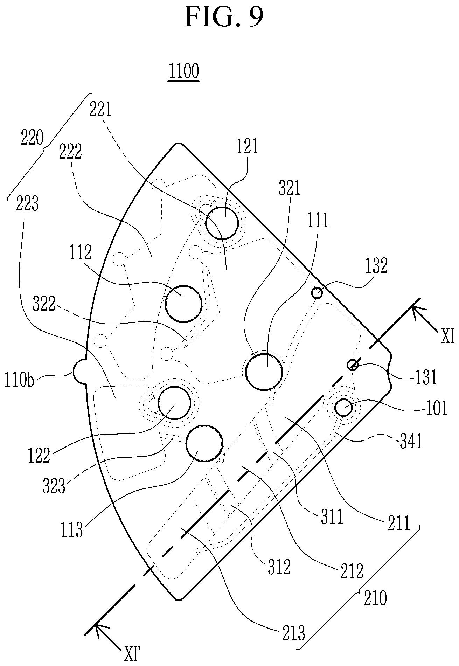

Hereinafter, each chamber of the fluid control portion of the fluid control device using centrifugal force according to an embodiment is described in detail with reference to FIGS. 9 to 11. Hereinafter, a case where the chamber of the fluid control portion is a centrifugal separation chamber has been illustrated and described as an embodiment, but the present invention is not limited thereto, and a case where the chamber of the fluid control portion is a chamber of various diagnostic devices such as a DNA prep chamber may be applied.

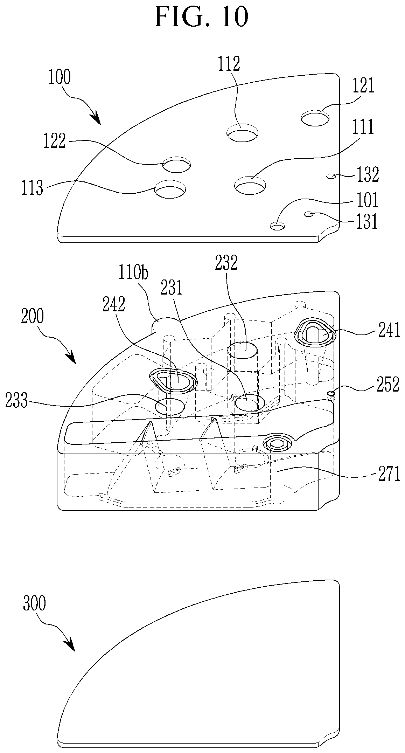

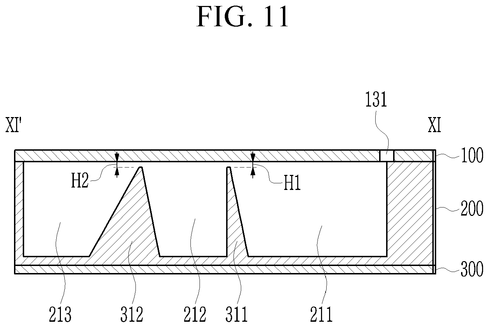

FIG. 9 is a plan view schematically illustrating a fluid control portion of a fluid control device using centrifugal force according to an embodiment, FIG. 10 is an exploded perspective view of the fluid control portion of FIG. 9, and FIG. 11 is a cross-sectional view of a chamber of FIG. 9 cut along a line XI-XI'.

Referring to FIGS. 9 and 10, the chamber 1100 includes an upper plate 100, a main body 200, and a lower plate 300.

The main body 200 includes a separation portion 210 in which a centrifuged fluid is separated for each component and positioned and an extraction portion 220 moving and accommodating the fluid separated for each component in the separation portion 210.

The separation portion 210 includes a first separation portion 211, a second separation portion 212, and a third separation portion 213 positioned side by side in one direction. In this regard, each region of the first separation portion 211 and the second separation portion 212 is separated by a first partition wall 311 positioned in the separation portion 210.

Referring to FIG. 11, the first partition wall 311 may be formed to have a predetermined distance H1 from the upper plate 100. The second partition wall 312 may be formed to have a predetermined distance H2 from the upper plate 100. In the present embodiment, the distance H1 between the first partition wall 311 and the upper plate 100 and the distance H2 between the second partition wall 312 and the upper plate 100 are not necessarily the same. This may be appropriately adjusted according to the characteristics of a component to be separated, for example, whether the component is a solid component or a liquid component, and an amount of the component to be separated.

In addition, the first partition wall 311 and the second partition wall 312, for example, may have a structure in the shape protruding from the lower plate 300, and may have a structure in the shape protruding from an inner sidewall of the separation portion 210 of the main body 200, and the shape is not particularly limited. When, for example, blood is introduced as a centrifugation fluid, after centrifugation, a buffy coat including a large number of white blood cells is positioned in the second separation portion 212, and a component including a large number of red blood cells is positioned in the third separation portion 213.

Therefore, when centrifugation is performed after injecting blood into the third separation portion for centrifugation and filling the second separation portion 212 and the first separation portion 211, among components of the blood positioned in the third separation portion 213, a component corresponding to the buffy coat moves to a region of the second separation portion 212 along the second partition wall 312, and among components of the blood positioned in the second separation portion 212, a component including a large number of red blood cells moves to the third separation portion 213 along the second partition wall 312.

As described above, since the separation portion 210 includes the first separation portion 211, the second separation portion 212, and the third separation portion 213, each component of the centrifuged fluid may be positioned in each of the first separation portion 211, the second separation portion 212, and the third separation portion 213 for each component.

The main body 200 includes an inlet extension portion 271, and the inlet extension portion 271 has a structure connected to an injection path 341 positioned at the lower portion of the main body 200.

When the fluid is injected into an injection hole 101 of the upper plate 100 for centrifugal separation of the desired fluid, the fluid injected through the injection hole extension portion 271 and the injection path 341 moves to the third separation portion 213.

At this time, when the first vent hole 131 is opened, the fluid injected into the third separation portion 213 by air circulation may move to the second separation portion 212 along the second partition wall 312, and thereafter, move to the first separation portion 211 along the first partition wall 311. In the present embodiment, the separation portion includes the first separation portion to the third separation portion, but if necessary, a separation portion may be further added.

The first vent hole 131 is preferably positioned in a region close to the rotation shaft 2300 of the centrifugal separator in the upper plate 100. In addition, the fluid injected for centrifugation, for example, blood, is preferably filled from a region of the third separation portion positioned farthest from the rotation shaft 2300 of the centrifugal separator. In this case, since air pushed by the injected fluid escapes through the upper first vent hole 131, the fluid injection is smooth. In addition, since no bubble is generated in the fluid, the fluid may be quickly and easily injected into the chamber for the centrifugal separator without damaging a valid component included in the fluid, for example, cells.

Meanwhile, the main body 200 includes an extraction portion 220, and the extraction portion 220 includes a first extraction portion 221, a second extraction portion 222, and a third extraction portion 223. The first extraction portion 221 is a space for moving and accommodating the components separated in the first separation portion 211, and the second extraction portion 222 is a space for additionally separating the components moved to the first extraction portion 221 and then moving and accommodating the additional separated components.

Specifically, the first separation portion 211 is connected to a first extraction path 321 positioned at the lower portion of the main body 200. The components separated in the first separation portion 211 after centrifugation are moved through the first extraction path 321 connected to the first separation portion 211 and accommodated in the first extraction portion 221.

The main body 200 includes a first valve unit 231 positioned to overlap a partial region of the first extraction path 321. At this time, a first valve is positioned in the first valve unit 231, and the first extraction path 321 is opened and closed by the first valve. Therefore, in order to extract the components separated in the first separation portion 211 after centrifugation, the components separated in the first separation portion may be moved to the first extraction portion 221 by driving the first valve to open the first extraction path 321.

After separated in the first separation portion as described above, the components accommodated in the first extraction portion 221 through the first extraction path 321 may be further separated by a method of performing centrifugation once more, and may be moved to the second extraction portion 222 through a second extraction path 322 connected to the first extraction portion 221. In this case, a contaminant among the components centrifuged and separated in the first separation portion may be more reliably removed.

When, for example, blood is injected as the fluid, the separated components positioned in the first separation portion 211 through centrifugation is plasma.

Such plasma is used for genomic analysis of cell free DNA, which is used as a method of liquid biopsy to perform diagnosis using a part of a specific tissue secreted into blood without directly extracting the patient's tissue. That is, in the genomic analysis of cell free DNA, a method of increasing the accuracy of diagnosis by centrifuging plasma obtained after separating components of whole blood two more times and removing contaminants is common. In this case, it is necessary to manually divide the components of blood by changing several tubes, and to centrifuge the components continuously again, which takes a lot of time and effort, and a skill level of an operator greatly affects the accuracy of a diagnosis result, which causes cost increase.

However, as in the present embodiment, it is possible to obtain a plasma that is not contaminated by another DNA component by primarily separating the plasma in the first extraction portion 221, performing additional centrifugation on the plasma, and accommodating a supernatant separated in the first extraction portion 221 in the second extraction portion 222.

The first extraction portion 221 includes a second vent hole extension portion 252 on the sealed upper surface, and the second vent hole extension portion 252 has a structure integral with the second vent hole 132 positioned in the upper plate 100. When the second vent hole 132 needs to move the component separated in the first separation portion 211 to the first extraction portion 221, that is, when the first valve is opened, the second vent hole 132 also needs to be opened. In addition, when the component additionally separated in the first extraction portion 221 is moved to the second extraction portion 222, that is, when the second valve is opened, the second vent hole 132 also needs to be opened. When the first valve is closed, the second vent hole 132 may also be closed.

The first extraction portion 221 is connected to the second extraction path positioned at the lower portion of the main body 200. The components additionally centrifuged as described above in the first extraction portion 221 are moved through the second extraction path 322 connected to the first extraction portion 221 and accommodated in the second extraction portion 222.

The second extraction portion 222 includes a first withdrawal portion 241. The first withdrawal portion 241 may be of a through-hole type in which upper and lower surfaces of the main body 200 are opened, and have a conical structure in which an upper portion has a larger diameter than a lower portion. In addition, an upper opening of the first withdrawal portion 241 has a structure integral with a first withdrawal hole 121 positioned in the upper plate 100.

As such, the components additionally separated and accommodated in the second extraction portion 222 may be withdrawn to the outside through the first withdrawal hole 121. In this regard, the withdrawal to the outside through the first withdrawal hole 121 may be performed using, for example, a pipette, etc.

Next, the second separation portion 212 is connected to the third extraction path 323 positioned in the lower portion of the main body 200. The components separated in the second separator 212 after centrifugation are moved through the third extraction path 323 connected to the second separation portion 212 and accommodated in the third extraction portion 223.

The main body 200 includes a third valve unit 233 positioned to overlap a partial region of the third extraction path 323. At this time, a third valve is positioned in the third valve unit 233, and the third extraction path 323 is opened and closed by the third valve. Therefore, in order to extract the components separated in the second separation portion 212 after centrifugation, the components separated in the second separation portion 212 may be moved to the third extraction portion 223 by driving the third valve and opening the third extraction path 323.

The third extraction portion 223 includes a second withdrawal portion 242. The second withdrawal portion 242 may be of a through-hole type in which the upper and lower surfaces of the main body 200 are opened, and have a conical structure in which the upper portion has a larger diameter than the lower portion. In addition, an upper opening of the second withdrawal portion 242 has a structure integral with a second withdrawal hole 122 positioned on the upper plate 100.

As described above, the component accommodated in the third extraction portion 223 may be withdrawn to the outside through the second withdrawal hole 122. In this regard, the withdrawal to the outside through the second withdrawal hole 122 may be performed using, for example, a pipette, etc.

Referring to FIG. 10, the upper plate 100 is to prevent contamination when injecting a fluid for centrifugation or withdrawing each centrifuged component to the outside, and includes the injection hole 101 and the withdrawal portions 121 and 122.

The injection hole 101 is for injecting the fluid into a separation portion before centrifugation, and the withdrawal portion is for extracting each component of the centrifuged fluid for each component. In this regard, as shown in FIGS. 1 and 8, the central portion 320 of the upper fixing portion 3000 may be disposed to overlap the injection hole 101.

The withdrawal portion includes the first withdrawal portion 121 and the second withdrawal portion 122.

In the present embodiment, the first withdrawal portion 121 is for withdrawing the components accommodated in the second extraction portion 222 among the components of the centrifuged fluid to the outside. In present embodiment, the components accommodated in the second extraction portion 222 are high purity liquid components obtained by, for example, moving the components separated in the first separation portion after centrifugation to the first extraction portion 221, additionally separating the components of a relatively low density, and moving the components to the second extraction portion 222.

In addition, the second withdrawal portion 122 is for withdrawing the components accommodated in the third extraction portion 223 among the components of the centrifuged fluid to the outside. The upper plate 100 includes the first vent hole 131 and the second vent hole 132 together with the injection hole and the withdrawal portion.

The first vent hole 131 is positioned on the upper surface of the first separation portion 211 positioned in the main body 200. If necessary, when the upper surface of the separation portion 210 has a closed structure, a first vent hole extension portion (not shown) may be formed on the upper surface of the first separation portion 211.

The second vent hole 132 is connected to the second vent hole extension portion 252 included in the first extraction portion 221 positioned in the main body 200.

In addition, the upper plate 100 includes a first valve hole 111, a second valve hole 112, and a third valve hole 113.

The first valve hole 111 is connected to the first valve unit 231. The first valve unit 231 is positioned to overlap a partial region of the first extraction path 321 positioned in the main body 200. The first valve positioned in the first valve unit 231 is driven through the first valve hole 111, and the first extraction path 321 is opened and closed through the first valve, and thus the movement of the components separated in the first separation portion may be controlled.

The second valve hole 112 is connected to the second valve unit 232. The second valve unit 232 is positioned to overlap a partial region of the second extraction path 322 positioned in the main body 200. The second valve positioned in the second valve unit 232 is driven through the second valve hole, and the second extraction path 322 is opened and closed through the second valve, and thus, the movement of the components accommodated in the first extraction portion 221 may be controlled.

The third valve hole 113 is connected to the third valve unit 233. The third valve unit 233 is positioned to overlap a partial region of the third extraction path 323. The third valve positioned in the third valve unit 233 is driven through the third valve hole 113, and the third extraction path 323 is opened and closed through the third valve, and thus the movement of the components separated in the second separation portion 212 may be controlled

The lower plate 300 seals an opening partially formed in the lower portion of the main body 200.

In the present embodiment, the structure in which the first partition wall 311 and the second partition wall 312 are formed in the main body 200 is illustrated. However, the first partition wall 311 and the second partition wall 312 may be formed to protrude from the lower plate 300 if necessary.

On the other hand, in the embodiment shown in FIGS. 1 to 8, the sidewall fixing protrusion of the chamber is combined with the lower fixing groove formed in the inner wall of a lower edge of the lower fixing portion to fix the chamber, but another embodiment in which the chamber is fixed by using the support fixing groove formed in the support portion of the lower fixing portion is also possible.

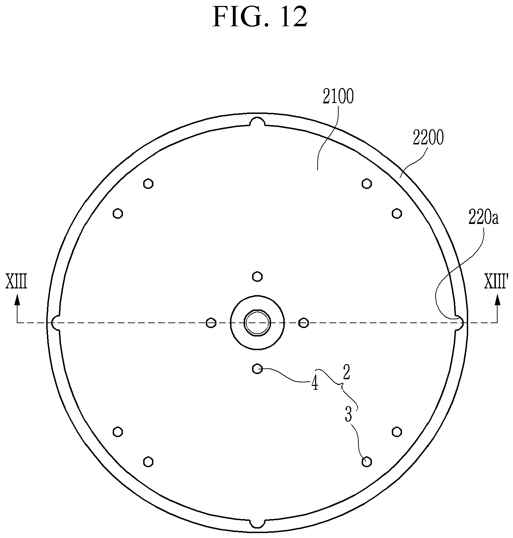

Hereinafter, a fluid control device using centrifugal force according to another embodiment of the present invention will be described in detail with reference to FIGS. 12 to 14.

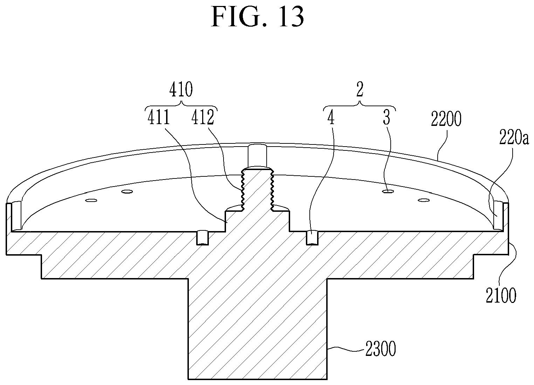

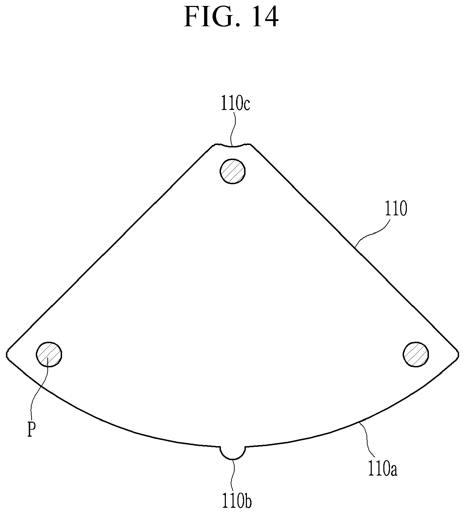

FIG. 12 is a plan view of a lower fixing portion of a fluid control device using centrifugal force according to another embodiment, FIG. 13 is a schematic cross-sectional perspective view taken along line XIII-XIII' of FIG. 12, and FIG. 14 is a bottom view of a chamber of a fluid control portion of the fluid control device using centrifugal force according to another embodiment.

Another embodiment shown in FIGS. 12 to 14 is substantially the same as the embodiment shown in FIGS. 1 to 8 except for the structure of the lower fixing portion and the chamber, and thus, repeated descriptions are omitted.

As shown in FIGS. 12 and 13, the lower fixing portion 2000 of the fluid control device using centrifugal force according to another embodiment of the present invention may include the support portion 2100, the lower edge portion 2200, and the rotation shaft 2300.

The support portion 2100 has a circular shape in a planar view and may support the plurality of chambers 1100. An upper surface of the support portion 2100 may have a plurality of support fixing grooves 2. The support fixing groove 2 may have a circular shape. The plurality of support fixing grooves 2 may be formed at positions corresponding to corners of the chamber 1100 of the sector shape. More specifically, the plurality of support fixing grooves 2 may include a first support fixing groove 3 adjacent to the lower edge portion 2200, and a plurality of second support grooves 4 formed adjacent to edges of the central support portion 411.

Also, as shown in FIG. 14, a lower surface of the chamber 1100 may have a plurality of lower surface circular protrusions P. Accordingly, the support fixing groove 2 is combined with the lower circular protrusion P to limit a sliding movement of the chamber 1100 on the support portion 2100 and fix the position of the chamber 1100.

On the other hand, in the embodiment shown in FIGS. 12 to 14, the chamber was fixed by using the circular support fixing groove formed in the support portion of the lower fixing portion, but another embodiment in which the chamber was fixed by using a linear fixing portion formed in the support portion of the lower fixing portion is also possible.

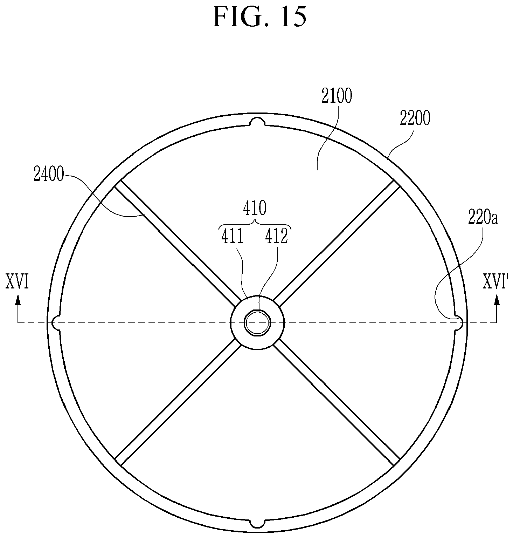

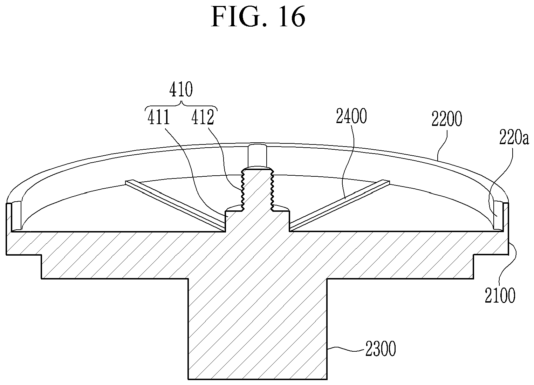

Hereinafter, a fluid control device using centrifugal force according to another embodiment of the present invention will be described in detail with reference to FIGS. 15 and 16.

FIG. 15 is a plan view of a lower fixing portion of a fluid control device using centrifugal force according to another embodiment, and FIG. 16 is a schematic cross-sectional perspective view taken along line XVI-XVI' of FIG. 15.

As shown in FIGS. 15 and 16, the lower fixing portion 2000 of the fluid control device using centrifugal force according to another embodiment of the present invention may include the support portion 2100, the lower edge portion 2200, the rotation shaft 2300, and a plurality of linear fixing portions 2400.

The support portion 2100 has a circular shape in a planar view and may support the plurality of chambers 1100.

The plurality of linear fixing portions 2400 may be positioned to protrude above the support portion. The linear fixing portion 2400 may connect the lower edge portion 2200 and the central support portion 411. In this regard, the linear fixing portion 2400 may be formed at a position corresponding to the spaced portion 1 of the fluid control portion 1000. Accordingly, the linear fixing portion 2400 may be combined with the spaced portion 1 to limit a sliding movement of the chamber 1100 on the support 2100 and fix the position of the chamber 1100.

The present invention is not limited to the above embodiments, but may be manufactured in variously different forms, and it will be understood by those of ordinary skill in the art to which the present invention pertains that the present invention may be embodied in a different specific form without changing the technical idea or essential features of the present invention. Therefore, it should be understood that the embodiments described above are illustrative in all respects and not restrictive.

## Claims

1. A fluid control device using centrifugal force comprising:
a fluid control portion comprising a plurality of chambers and controlling a movement of a fluid inside the chamber;
a lower fixing portion positioned on a lower portion of the fluid control portion and fixing the plurality of chambers;
an upper fixing portion positioned an on upper portion of the fluid control portion and fixing the plurality of chambers; and
a fastening member penetrating and fastening the lower fixing portion, the fluid control portion, and the upper fixing portion,
Wherein each of the plurality of chambers is disposed to face each other and placed on the lower fixing portion.

2. The fluid control device using centrifugal force of claim 1, wherein:
the chamber has a sector shape in a planar view, and
the chambers adjacently disposed include a spaced portion and are spaced apart from each other.

3. The fluid control device using centrifugal force of claim 1, wherein:
the lower fixing portion includes
a support portion supporting the fluid control portion, and
a lower edge portion installed along an edge of the support portion and forming a seating groove for seating the fluid control portion,
an inner wall of the lower edge portion includes a plurality of lower fixing grooves.

4. The fluid control device using centrifugal force of claim 3, wherein:
an outer sidewall of the chamber includes a sidewall fixing protrusion combined with the lower fixing groove.

5. The fluid control device using centrifugal force of claim 4, wherein:
the sidewall fixing protrusion is linear.

6. The fluid control device using centrifugal force of claim 3, wherein:
the fastening member includes
a lower fastening portion positioned at the center of the support portion, and
an upper fastening portion positioned at the center of the upper fixing portion and fastened to the lower fastening portion.

7. The fluid control device using centrifugal force of claim 6, wherein:
the lower fastening portion includes a circular central support portion, and a protrusion portion installed on the central support portion and fastened to the upper fastening portion, and
an inner sidewall of the fluid control portion is fixed in contact with a sidewall of the central support portion.

8. The fluid control device using centrifugal force of claim 7, wherein:
an upper surface of the support portion includes a plurality of support fixing grooves,
a lower surface of the chamber includes a plurality of lower circular protrusions, and
the support fixing groove is combined with the lower circular protrusion.

9. The fluid control device using centrifugal force of claim 8, wherein:
the plurality of support fixing grooves are formed at positions corresponding to corners of the chamber of the sector shape.

10. The fluid control device using centrifugal force of claim 7, wherein:
the lower fixing portion further includes a plurality of linear fixing portions positioned on the support portion, and
the linear fixing portions connects the lower edge portion and the central support portion.

11. The fluid control device using centrifugal force of claim 10, wherein:
the linear fixing portion is combined with the spaced portion.

12. The fluid control device using centrifugal force of claim 6, wherein:
the upper fixing portion includes
an upper edge portion overlapping the lower edge portion,
a central portion positioned to be spaced apart from the upper edge portion and corresponding to the lower fastening portion, and
a plurality of branch portions connecting the upper edge portion and the central portion, and
the branch portion is combined with the spaced portion.
